## Europäisches Patentamt
## European Patent Office
## Office européen des brevets

(19)

(11) Veröffentlichungsnummer : **0 245 715 B1**

(12) # EUROPÄISCHE PATENTSCHRIFT

(45) Veröffentlichungstag der Patentschrift :
**11.12.91 Patentblatt 91/50**

(51) Int. Cl.$^5$ : **B01D 36/04**

(21) Anmeldenummer : **87106279.0**

(22) Anmeldetag : **30.04.87**

(54) **Einrichtung zur Aufbereitung von Verunreinigungen, Rückständen und/oder Alterungsprodukten aufweisenden Flüssigkeiten.**

Die Akte enthält technische Angaben, die nach dem Eingang der Anmeldung eingereicht wurden und die nicht in dieser Patentschrift enthalten sind.

(30) Priorität : **15.05.86 DE 3616426**

(43) Veröffentlichungstag der Anmeldung :
**19.11.87 Patentblatt 87/47**

(45) Bekanntmachung des Hinweises auf die Patenterteilung :
**11.12.91 Patentblatt 91/50**

(84) Benannte Vertragsstaaten :
**AT BE DE ES FR GB IT NL**

(56) Entgegenhaltungen :
**DE-A- 2 852 836**
**US-A- 4 504 397**

(56) Entgegenhaltungen :
**TECHNISCHE MITTEILUNGEN, Band 68, Heft 7/8, Juli/August 1975, Seiten 298-304, Essen; H. KNOBLOCH: "Kühlschmierstoffpflege und Reinigung Altemulsionstrennung"**
**SOVIET INVENTIONS ILLUSTRATED, Sektion Chemie, Woche K11, 27. April 1983, Zusammenfassung Nr. 27155 K/11, Derwent Publications Ltd., London, GB**

(73) Patentinhaber : **SMS SCHLOEMANN-SIEMAG AKTIENGESELLSCHAFT**
**Eduard-Schloemann-Strasse 4**
**W-4000 Düsseldorf 1 (DE)**

(72) Erfinder : **Schimion, Werner**
**Am Witschenberg 4**
**W-5912 Hilchenbach (DE)**

(74) Vertreter : **Müller, Gerd et al**
**Patentanwälte**
**HEMMERICH-MÜLLER-GROSSE-POLLMEIER-MEY**
**Hammerstrasse 2**
**W-5900 Siegen 1 (DE)**

EP 0 245 715 B1

## Beschreibung

Die Erfindung betrifft eine Einrichtung zur kontinuierlichen Aufbereitung von Verunreinigungen, Rückstände und/oder Alterungsprodukte aufweisenden, insbesondere zur Kühlung und/oder Schmierung eingesetzten Flüssigkeiten durch Filtration ohne zusätzliche Anschwemmittel mit einem gebrauchte, rücklaufende Flüssigkeit aufnehmenden Sammelbehälter und einem über einen mittels einer Filterpumpe gespeisten spülbaren Filter mit diesem verbundenen, die gereinigte Flüssigkeit zur Weitergabe an die Verbraucher aufnehmenden Vorlaufbehältern.

Bei spanenden sowie bei spanlosen Umformverfahren werden verbreitet Flüssigkeiten zum Kühlen und/oder Schmieren eingesetzt, die ständig mit feinem Abrieb aus dem Umformvorgang verunreinigt werden. Bei Erdölderivaten, z.B. Kerosinen, die überwiegend in der Aluminiumumformung Anwendung finden, entstehen zusätzlich Alterungsprodukte. Durch ständige Anreicherung sowohl an Abrieb und anderen Verschmutzungen als auch an Alterungsprodukten wird die Gebrauchsfähigkeit dieser Kühl- und Schmiermittel bis zur Unbrauchbarkeit herabgesetzt, wenn es nicht gelingt, diese wieder auszuscheiden.

Zum Entfernen dieser Verunreinigungen werden Anschwemmfilter eingesetzt, bei denen eine aus Kieselgur und Bleicherde bestehende Anschwemmschicht die Verunreinigungen herausfiltert. Diese Anschwemmschicht ist jedoch nach ihrer Sättigung mit Verunreinigungen zu entfernen und durch eine neue zu ersetzen. Hierdurch werden nicht nur erhebliche Mengen des aufwendigen Anschwemmittels benötigt, es entstehen auch hohe Entsorgungskosten, da die Entsorgung der mit den aufgenommenen Verunreinigungen sowie einer erheblichen Restflüssigkeit durchsetzten Filterschichten äußerst schwierig und damit kostspielig ist. Darüber hinaus geht mit der im Filterkuchen noch befindlichen Restflüssigkeit nicht nur ein erheblicher Anteil der Kühl- und Schmierflüssigkeit selbst verloren, bei diesem Verfahren werden der Kühl- und Schmierflüssigkeit ungewollt auch wertvolle Additive entzogen. Als schwierig hat sich bei diesen wie auch bei weiteren bekannten Filterverfahren gezeigt, ohne wesentlichen personellen Aufwand eine praktisch kontinuierliche Filterung durchzuführen.

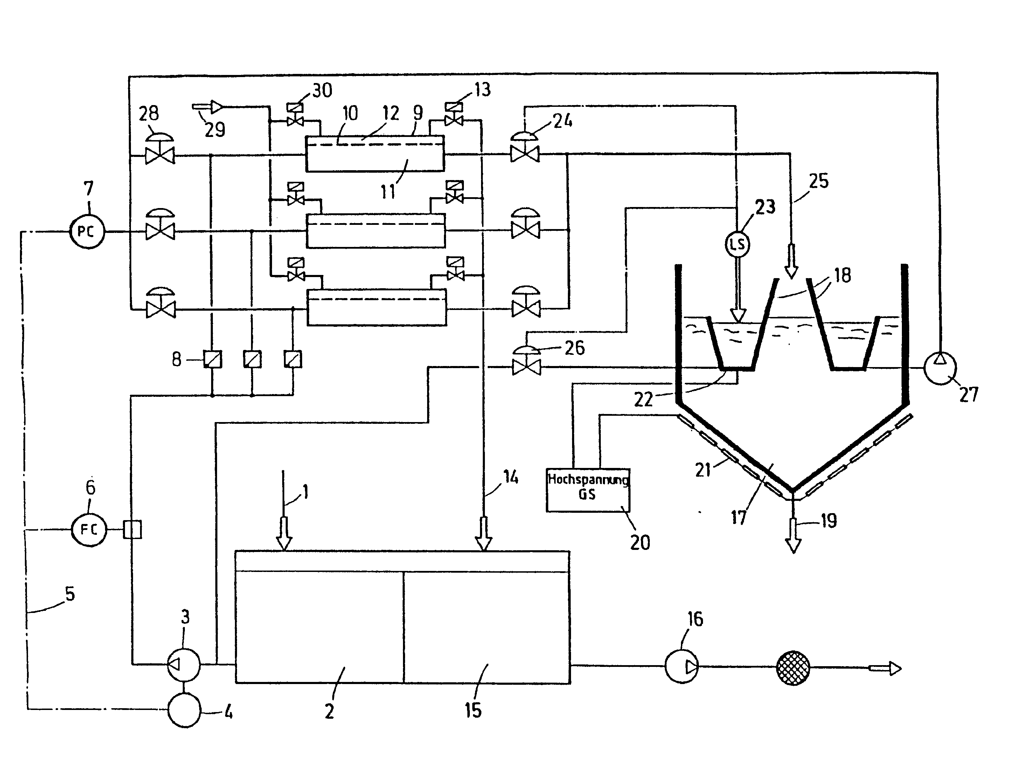

In den Technischen Mitteilungen, Bd. 68, Heft 7/8 vom Juli/August 1975, Seiten 298 bis 304, Essen BRD, erschien ein Aufsatz von H. Knobloch: "Kühlschmierstoffpflege und Reinigung Altemulsionstrennung". Bspw. die in Bild 7 dargestellte Anschwemmfilteranlage zeigt den bereits gerügten Nachteil des unvorteilhaft hohen Anfalles zu entsorgenden Gutes. Der Betriebsablauf wird durch die Regenerierung des Anschwemmfilters erheblich belastet, da relativ große Mengen des Filterhilfsmittels sowie der ausgefilterten Verunreinigungen rückzuspülen sind, und unvorteilhaft erweist sich auch, daß dieses Rückspülen mit bereits gefilterter Flüssigkeit durchzuführen ist. Auch der Aufbau der anzuschwemmenden Schicht erweist sich oft als problematisch, und die Aufbereitung des Filterhilfsmittels erfordert zusätzlich ein Aufschwemmbecken mit Dosier- und Mischvorrichtungen. Als unvorteilhaft erweist sich auch hier, daß der zu reinigenden Flüssigkeit wertvolle Additive verlorengehen, die üblicherweise vom Filterhilfsmittel selektiv und somit überproportional absorbiert werden.

Das Dokument 2), die DE-A-2 852 836 offenbart eine Anlage zur Behandlung von Kühlschmierflüssigkeiten, die aus einem Sammeltank 2 über eine Reinigungsanlage 3 in einen Reinbehälter 4 überführt werden, ohne daß jedoch diese Reinigungsanlage beschrieben wäre; an anderer Stelle werden jedoch Bandfilter, Absetzbecken, Zentrifugen, Separatoren, Magnetabscheider sowie Druckfilter benannt und schließlich Ultrafilter aufgeführt. Das Dokument vermag daher über die eigentliche Reinigung im Sinne der vorliegenden Erfindung nichts auszusagen.

Die Erfindung geht daher von der Aufgabe aus, eine Einrichtung der eingangs beschriebenen Gattung anzugeben, die es bei geringem materiellem und personellem Aufwande erlaubt, aus Kühl- bzw. Schmierflüssigkeiten Verunreinigungen sowie Alterungs- und Oxidationsprodukte zu entfernen, die oft kostspieligen Additive jedoch weitgehend zu belassen, die zu entsorgenden Rückstände nur in geringen Mengen abgibt, und die weiterhin im Rahmen von Rückspülvorgängen praktisch keines Filtrates bedarf.

Gelöst wird diese Aufgabe mit den Merkmalen des Patentanspruches 1. Es werden hiernach parallele Filter eingesetzt, die sich mit zunehmendem Zusetzen durch in derenzugeordnetem Absetzgefäß nur grob gereinigter Flüssigkeit rückspülen lassen. Die starke Verschmutzungen aufweisende Rückspülflüssigkeit wird in das Absetzgefäß zurückgegeben, in dem die wesentlichen Verschmutzungsund Alterungsanteile durch Sedimentation ausfallen und in hoher Konzentration zur Entsorgung abziehbar sind, während die durch Absetzen weitgehend gereinigte eigentliche Spülflüssigkeit in den Sammelbehälter zur endgültigen Reinigung durch Filtration rückgeführt werden kann. Die Vorgänge des periodischen und zyklischen Rückspülens der Filter lassen sich ebenso automatisieren und damit ohne gesonderten personellen Aufwand durchführen, wie die Reinigung der Spülflüssigkeit und das Abziehen der ausgefallenen Sedimente. Durch das zyklische Spülen wird der eigentliche Filtervorgang über die einander parallel wirksamen Filter laufend fortgeführt, wobei nur der jeweils rückspülende Filter für die Filtration kurzzeitig ausfällt.

Zweckmäßige Weiterbildungen der Einrichtung sind in den Unteransprüchen gekennzeichnet.

Im einzelnen sind die Merkmale der Erfindung anhand der folgenden Beschreibung eines Ausführungsbeispieles in Verbindung mit einer dieses darstellenden Zeichnung erläutert.

In der die Einrichtung schematisch darstellenden Figur ist ein Rücklauf 1 gezeigt, der, beispielsweise von einem Walzwerk, rücklaufende Kühl- und Schmierflüssigkeit aufnimmt und sie einem Sammelbehälter 2 zuführt. Entnommen wird sie diesem Sammelbehälter mittels einer Filterpumpe 3, die durch einen Elektromotor 4 betrieben ist, der über eine durch eine strichpunktierte Beziehung angedeutete Regelvorrichtung 5 so betrieben wird, daß der Durchflußmesser 6 eine konstante Fördermenge erfaßt.

Die geförderte Flüssigkeit erreicht über Rückschlagventile 8 jeweils eine Filtergehäuse 9, das durch eine Filtermembran 10 in eine Einlaufkammer 11 und in eine Sammelkammer 12 für die die Filtermembran 10 durchsetzende, gereinigte Flüssigkeit unterteilt ist. Über den Sammelkammern 12 jeweils zugeordnete Ventile 13 wird die gereinigte Flüssigkeit in eine Sammelleitung 14 überführt und erreicht über diese einen Vorlaufbehälter 15, von dem aus die gereinigte Flüssigkeit mittels einer Vorlaufpumpe 16 abziehbar ist und ihrem Verwendungszweck, beispielsweise einem zu schmierenden und zu kühlenden Walzwerk, zuführbar ist.

Zum Reinigen der bei Spülvorgängen anfallenden stark verschmutzten Flüssigkeit ist ein gesondertes Absetzgefäß 17 vorgesehen, auf dessen stark geneigten Boden sich Verunreinigungen abzusetzen vermögen und hierbei gleichzeitig der tiefsten Stelle des Bodens so zugeführt werden, daß sie über einen für die Sedimente vorgesehenen Abzug 19 abführbar sind. Im oberen Bereiche sind Überlaufrinnen 18 vorgesehen, in die die durch Absetzen vorgereinigte Flüssigkeit überzutreten vermag. Der Absetzvorgang wird durch Anlegen eines elektrostatischen Feldes zumindest bei Ölderivaten unterstützt: die Hochspannungsquelle 20 speist mit ihrem positiven Pol Elektroden 21, die den aus Isolierstoff, beispielsweise Kunststoff, gefertigten Boden des Absetzgefäßes 17 unterfangen, während negative Elektroden am Boden der Überlaufrinnen 18 vorgesehen sind, falls diese nicht aus Metall bestehen und selbst als Elektroden beschaltet werden.

Das in den Überlaufrinnen 18 anstehende Niveau wird von einem Niveaugeber erfaßt und durch ihn in vorgegebene Grenzen eingeregelt: erweist sich das Niveau als zu gering, so wird eines der den Einlaufkammern 11 der Filtergehäuse 9 nachgeordneten Ablaßventile 24 geöffnet, so daß ungereinigte Flüssigkeit über die Spülleitung 25 das Absetzgefäß 17 erreicht, bis überlaufende Flüssigkeit die Überlaufrinnen 18 ausreichend füllt. Steigt das Niveau in den Überlaufrinnen jedoch über einen vorgegebenen Wert an, so bewirkt der Niveaugeber 23 ein Öffnen des Entlastungsventiles 26, das Flüssigkeit aus den Überlaufrinnen 18 in den Sammelbehälter 2 oder in die Saugleitung der Pumpe 3 überführt.

Den Filtergehäusen 9 oder mindestens einem dieser Filtergehäuse ist ein Druckmesser 7 zugeordnet, der den mit wachsender Stärke des Filterkuchens ansteigenden Druck ermittelt. Wird hierbei ein vorgegebener, eine maximale Verschmutzung kennzeichnender Druck festgestellt, so wird durch diesen Druckmesser 7 über eine nicht dargestellte Steuervorrichtung ein Spülvorgang ausgelöst. Hierzu wird zunächst einmal die Spülpumpe 27 eingeschaltet, und das erste der Spülventile 28 ebenso geöffnet wie das erste und zuoberst dargestellte der Ablaßventile 24. Damit fließt ein von der Spülpumpe 27 mit relativ hohem Druck bewirkter Flüssigkeitsstrom durch das erste der Filtergehäuse 9 und streift hierbei den auf der Filtermembran 10 gebildete Filterkuchen mit relativ hoher Geschwindigkeit, so daß dieser abgespült und seine Bestandteile mit in den Absetzbehälter 17 fortgerissen werden. Unterstützt wird dieses Abspülen des Filterkuchens durch ein Schließen des ersten der Ventile 13 und Öffnen des ersten der Druckluftventile 30, so daß der Druck der Druckluftquelle 29 sich auf die Sammelkammer 12 auszuwirken vermag und der auf die Filtermembran 10 sich auswirkende Druck die Ablösung des Filterkuchens beschleunigt bzw. bewirkt. Hierbei kann in der Sammelkammer noch befindliche Flüssigkeit ebenso durch die Filtermembran 10 hindurchgedrückt werden wie auch Druckluftanteile die Membran zu passieren vermögen. Jedenfalls wird durch diese Druckbeaufschlagung von der Sammelkammer 12 her die Ablösung des Filterkuchens beschleunigt und vervollständigt, so daß der gesamte Filterkuchen in kürzester Zeit abgelöst und fortgeschwemmt ist. Die von der Spülpumpe 27 mit höherem Druck zur Verfügung gestellte Flüssigkeit wirkt sich ausschließlich auf den Spülkreislauf aus, da die eigentliche Speiseleitung durch ein Rückschlagventil gesichert ist, das unter Einwirkung des höheren Druckes der Spülpumpe 27 schließt.

Nach Ablauf eines vorgegebenen kurzen, die Ablösung und Fortschwemmung des Filterkuchens sichernden Zeitintervalls wird die Spülung des ersten der Filtergehäuse abgeschlossen, indem das Spülventil 28 ebenso geschlossen wird wie das Druckluftventil 30 und das Ablaßventil 24, während das Ventil 13 geöffnet wird. Damit öffnet sich auch das zugeordnete der Rückschlagventile 8, und der Filterprozeß wird wieder aufgenommen. Gleichzeitig aber werden nunmehr das zweite der Ventile 13 geschlossen und das zweite Spülventil 28 ebenso geöffnet wie das zweite Ablaßventil 24 und das zweite der Druckluftventile 30, so daß anschließend an die Spülung des ersten der Filtergehäuse 9 nunmehr die des zweiten erfolgt. Nach ausreichender Spülung bzw. Spülzeit wird anschließend das dritte der Filtergehäuse 9 gespült.

Damit lassen sich die Spülgänge selbstätig und kurzzeitig durchführen, ohne das der eigentliche Filtervorgang unterbrochen wird. Als vorteilhaft erweist es sich, daß die den Filterkuchen mit sich reißende Spülfüssigkeit im Absetzgefäß 17 weitgehend gereinigt wird. In den langen Pausen zwischen den erforderlichen Spülvorgängen vermögen nicht nur größere, noch zusammenhängende Teile des Filterkuchens nach unten abzusinken, auch kleinere Schwebeteilchen vermögen nach unten auszufallen. Unterstützt werden sie hierbei durch das Anlegen eines durch die Hochspannungsquelle bewirkten elektrostatischen Feldes. Am Grunde des Absetzgefäßes verdichten sich die Sedimente, so daß nach Öffnen des Abzuges ein recht dickflüssiger Schlamm auftritt, der nur noch geringe Flüssigkeitsreste enthält. Damit sind für die Entsorgung beste Voraussetzungen gegeben: Ein weiteres Entfernen der Flüssigkeit entfällt, ohne daß dem Flüssigkeitskreislauf wesentliche Flüssigkeitsteile entzogen sind, die mit zusätzlichem Kostenaufwand zu ersetzen wären. Die abgezogenen Sedimente bestehen praktisch ausschließlich aus Verunreinigungen, so daß auch die zu entsorgenden Mengen gering bleiben. Da ausschließlich Oxidationsprodukte, Metallabrieb und nur geringe Flüssigkeitsmengen zu entsorgen sind, ergeben sich auch hier, insbesondere durch die geringen Mengen der angefallenen Sedimente, geringe Entsorgungskosten.

Als wesentlich hat es sich gezeigt, Filtermembranen großer aktiver Flächen auf geringem Raum unterzubringen und diese Filtermembranen mechanisch widerstandsfähig zu gestalten. Es hat sich gezeigt, daß sich dieses erreichen läßt, indem die Filtermembranen durch dünne, lange Kunststoffröhrchen oder gar Kunststoff-Kapillaren gebildet werden, die bündelweise in die Filtergehäuse eingebracht werden und so verbunden sind, daß beispielsweise alle Innenräume die Sammelkammer bilden, während alle Zwischenräume als Einlaufkammer wirksam sind. Die Wandungen der Kunststoffröhrchen bzw. -kapillaren sind entsprechend porös ausgebildet, wobei je nach Reinigungsaufgabe die Porengrößen zwischen 0,1 und 1,0 μm betragen können. Die Ausbildung der Filtermembran als Wandungen einer Vielzahl von Röhrchen geringen Durchmessers bedingt eine mit einfachen Mitteln erreichte hohe mechanische Stabilität, die sich auch in einer relativ hohen Druckbeaufschlagbarkeit auswirkt. Diese Stabilität wird mit relativ geringen Wandstärken erreicht, so daß auch der Durchtrittswiderstand der zu reinigenden Flüssigkeit durch die Wandungen relativ gering ist, und die Filterpumpe 3 mit relativ geringer Förderhöhe zu arbeiten vermag. In gleicher Weise lassen sich auch gebildete Filterkuchen relativ leicht von derart aufgebauten Filtermembranen lösen.

Die Erfindung gestattet damit den Aufbau einer relativ gedrängten und wenig aufwendigen Einrichtung zur Reinigung von Flüssigkeiten, bei der auch die auszufilternden Verunreinigungen in einer Form anfallen, welche die bedeutungsvolle und oft hohe Kosten verursachende Entsorgung vereinfacht und erheblich verbilligt.

**Patentansprüche**

1. Einrichtung zur kontinuierlichen Aufbereitung von Verunreinigungen, Rückstände und/oder Alterungsprodukte aufweisenden, insbesondere zur Kühlung und/oder Schmierung eingesetzten Flüssigkeiten durch Filtration ohne zusätzliche Anschwemmittel, mit einem gebrauchte, rücklaufende Flüssigkeit auf nehmenden Sammelbehälter (2) und einem über einen mittels einer Filterpumpe (3) gespeisten spülbaren Filter (9, 10) mit diesem verbundenen, die gereinigte Flüssigkeit zur Weitergabe an die Verbraucher aufnehmenden Vorlaufbehälter (15), **dadurch gekennzeichnet,** daß mindestens zwei parallel geschaltete Membranfilter mit einer Porengröße von 0,1 bis 1 μm vorgesehen sind, welche einzeln rückspülbar sind, daß ein eine gesonderte Spülpumpe (27) aufweisender, auslösbarer Spülkreis vorgesehen ist, der aus dem Überlauf, bspw. Überlaufrinne (18), eines Absetzgefäßes (17) durch jeweils eine der Einlaufkammern (11) der Membranfilter entlang deren Filtermembran und von dieser in das Abstzgefäß (17) führt, das mit einem Abzug (19) für Sedimente ausgestattet ist, und dessen Überlauf (Überlaufrinnen 18) mit dem Sammelbehälter (2) und-/oder der Spülpumpe (27) verbindbar ist.

2. Einrichtung nach Anspruch 1, **gekennzeichnet durch** Anwendung von einer Vielzahl poröser, die Filteröffnungen aufweisender dünnwandiger Röhrchen oder Kapillaren.

3. Einrichtung nach einem der Ansprüche 1 oder 2, **dadurch gekennzeichnet,** daß das Absetzgefäß (17) im Tiefpunkt seines geneigten Bodens den Abzug (19) für Sedimente aufweist, und daß es mit oben offenen Überlaufrinnen (18) zum Auffangen vorgereinigter Flüssigkeit versehen ist.

4. Einrichtung nach einem der Ansprüche 1 bis 3, **dadurch gekennzeichnet,** daß dem Absetzgefäß (17) eine Hochspannungsquelle (20) zugeordnet ist, deren Pole mit dessen Boden und den Überlaufrinnen (18) zugeordneten Elektroden (21, 22) verbunden sind.

5. Einrichtung nach einem der Ansprüche 2 bis 4, **dadurch gekennzeichnet,** daß die Röhrchen oder Kapillaren in einem rohrförmigen Filtergehäuse (9) vorgesehen sind, dessen Einlaufkammer (11) einseitig an einen Zulauf angeschlossen ist, während das andere Gehäuseende über Ablaßventile (24) an eine zum Absetzgefäß (17) führende Spülleitung (25) angeschlossen ist.

6. Einrichtung nach einem der Ansprüche 1 bis 5, **dadurch gekennzeichnet,** daß die Sammelkammern (12) der Filtergehäuse (9) einseitig und absperrbar mit einer zum Vorlaufbehälter (15) führenden Sammelleitung (14) verbunden sind, und daß das andere Gehäuseende mit Druckluft beaufschlagbar ist.

7. Einrichtung nach einem der Ansprüche 1 bis 6, **dadurch gekennzeichnet**, daß den Überlaufrinnen (18) ein Niveaugeber (23) zugeordnet ist, der beim Überschreiten eines vorgegebenen ersten Niveaus das Öffnen eines Entlastungsventiles (26) und beim Unterschreiten eines zweiten, niedrigeren Niveaus das Öffnen eines der Ablaßventile (24) bewirkt.

8. Einrichtung nach einem der Ansprüche 1 bis 7, **dadurch gekennzeichnet**, daß die Filterpumpe (3) mit konstanter Förderhöhe oder konstanter Fördermenge betrieben wird, und daß beim Unterschreiten einer vorgegebenen Fördermenge bzw. beim Überschreiten einer vorgegebenen Förderhöhe ein zyklisch die Filter (9) erfassender Spülvorgang ausgelöst wird.

## Claims

1. Equipment for the continuous treatment of liquids, which display contaminations, residues and/or products of aging and have been used in particular for cooling and/or lubrication, by filtration without additional alluvial means with a collecting container (2), which receives returning used liquid and a forward run container (15), which is connected therewith by way of a flushable filter (9, 10) fed by means of a filter pump (3) and which receives the purified liquid for onward transmission to the consuming devices, characterised thereby, that at least two parallelly connected membrane filters with a pore size of 0.1 to 1 micrometre are provided, which are flushable back individually, that an initiable flushing circuit is provided, which displays a separate flushing pump (27) and leads from the overflow or overflow gutter (18) of a settling tank (17) through a respective one of the inlet chambers (11) of the membrane filters along their filter membranes and from these into the settling tank (17), which is provided with an outlet (19) for sediments and the overflow (overflow gutters 18) of which is connectible with the collecting container (2) and/or the flushing pump (27).

2. Equipment according to claim 1, characterised by the application of a plurality of porous thin-walled tubelets or capillary tubes displaying the filter openings.

3. Equipment according to one of the claims 1 and 2, characterised thereby, that the settling tank (17) displays the outlet (19) for sediments in the lowest place of its sloping base and that it is provided with upwardly open overflow gutters (18) for the collection of preliminarily purified liquid.

4. Equipment according to one of the claims 1 to 3, characterised thereby, that the settling tank (17) is associated with a high-voltage source (20), the poles of which are connected with the base of the settling tank (17) and with electrodes (21, 22) associated with the overflow gutters (18).

5. Equipment according to one of the claims 2 to 4, characterised thereby, that the tubelets or capillary tubes are provided in a tubular filter housing (9), the inlet chamber (11) of which is connected at one end with an inlet, whilst the other housing end is connected by way of outlet valves (24) to a flushing duct (25) leading to the settling tank (17).

6. Equipment according to one of the claims 1 to 5, characterised thereby, that the collecting chambers (12) of the filter housings (9) are connected at one end and blockably with a collecting duct (14) leading to the forward run container (15) and that the other housing end is chargeable by compressed air.

7. Equipment according to one of the claims 1 to 6, characterised thereby, that the overflow gutters (18) are associated with a level transmitter (23), which causes the opening of a relief valve (26) on a preset first level being exceeded and the opening of one of the outlet valves (24) on a second and lower level being fallen below.

8. Equipment according to one of the claims 1 to 7, characterised thereby, that the filter pump (3) is operated at constant conveying head or constant conveyed quantity and that a flushing operation, which cyclically engages the filters (9), is initiated on a preset conveyed quantity being fallen below or a preset conveying head being exceeded.

## Revendications

1. Dispositif pour le traitement en continu, par filtration sans addition de produits de flottation, de liquides utilisés notamment pour la réfrigération et/ou la lubrification et contenant des impuretés, des résidus et/ou des produits de vieillissement, qui comprend un récipient collecteur (2) qui reçoit le liquide de retour usé et un récipient d'évacuation (15) qui est relié au précédent par l'intermédiaire d'un filtre rinçable (9, 10) alimenté au moyen d'une pompe à filtre (3) et qui reçoit le liquide purifié destiné à l'envoi aux utilisateurs, caractérisé en ce qu'il comporte au moins deux filtres à membrane qui sont montés en parallèle, ont une dimension de pores de 0,1 à 1 μm et peuvent être rincés invi duellement par circulation inversée, et en ce qu'il comporte un circuit de rinçage annexe qui comprend une pompe de balayage séparée (27) et part du trop-plein, par exemple de la gouttière de trop-plein (18) d'un récipient de décantation (17), pour traverser l'un des compartiments d'arrivée (11) des filtres à membrane et la membrane du filtre et aboutir au récipient de décantation (17) qui est muni d'une tubulure de soutirage (19) des sédiments et dont le trop-plein (gouttière de trop-plein 18) peut être relié au récipient collecteur (2) et/ou à la pompe de balayage (27).

2. Dispositif selon la revendication 1, caractérisé par l'utilisation d'une pluralité de petits tubes à parois minces ou capillaires poreux comportant les ouvertures du filtre.

3. Dispositif selon l'une des revendications 1 ou 2, caractérisé en ce que le récipient de décantation (17) comporte, au point le plus bas de son fond incliné, la tubulure de soutirage (19) des sédiments et en ce qu'il est muni de gouttières de trop-plein (18) ouvertes vers le haut pour la réception du liquide partiellement purifié.

4. Dispositif selon une des revendications 1 à 3, caractérisé en ce qu'au récipient de décantation (17) est associée une source de haute tension (20) dont les pôles sont reliés à son fond et à des électrodes (21, 22) associées aux gouttières de trop-plein (18).

5. Dispositif selon une des revendications 2 à 4, caractérisé en ce que les petits tubes ou capillaires sont montés dans un corps de filtre (9) dont le compartiment d'arrivée (11) est relié d'un côté à une canalisation d'arrivée tandis que l'autre extrémité du corps de filtre est reliée, par l'intermédiaire de soupapes-purgeurs (24), à une canalisation de purge (25) aboutissant au récipient de décantation (17).

6. Dispositif selon une des revendications 1 à 5, caractérisé en ce que les compartiments collecteurs (12) des corps de filtres (9) sont reliés, d'un côté et de manière à pouvoir en être isolés, à une canalisation collectrice (14) aboutissant au récipient d'évacuation (15) et en ce que l'autre extrémité du corps de filtre est soumise à l'action d'air comprimé.

7. Dispositif selon une des revendications 1 à 6, caractérisé en ce que les gouttières de trop-plein (18) sont munies d'un indicateur de niveau (18) qui,lorsque le niveau dépasse une première valeur fixée, provoque l'ouverture d'une soupape de décharge (26) et, lorsque le niveau s'abaisse au-dessous d'une deuxième valeur fixée, provoque l'ouverture de l'une des soupapes-purgeurs (24).

8. Dispositif selon une des revendications 1 à 7, caractérisé en ce que la pompe à filtre (3) fonctionne à une hauteur de refoulement contante ou à débit constant et en ce que, lorsque le débit s'abaisse audessous d'une valeur fixée ou lorsque la hauteur de refoulement dépasse une valeur fixée, un cycle de rinçage des filtres (9) se déclenche.

EP 0 245 715 B1

Hochspannung GS